(19)

Europäisches
Patentamt
European
Patent Office
Office européen
des brevets

(11) **EP 2 385 090 B1**

(12) **EUROPEAN PATENT SPECIFICATION**

(45) Date of publication and mention
of the grant of the patent:
**05.06.2013 Bulletin 2013/23**

(51) Int Cl.:
*C09J 133/00* (2006.01)     *C09J 133/04* (2006.01)
*C09J 133/06* (2006.01)

(21) Application number: **11162188.4**

(22) Date of filing: **13.04.2011**

(54) **Acrylic pressure-sensitive adhesive tape**

Acrylhaftklebeband

Bande adhésive en acrylique sensible à la pression

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.04.2010 JP 2010092641**
**11.04.2011 JP 2011087357**

(43) Date of publication of application:
**09.11.2011 Bulletin 2011/45**

(73) Proprietor: **Nitto Denko Corporation
Ibaraki-shi, Osaka 567-8680 (JP)**

(72) Inventors:
• **Inokuchi, Shinji
Ibaraki-shi Osaka 567-8680 (JP)**
• **Hirose, Tetsuya
Ibaraki-shi Osaka 567-8680 (JP)**

(74) Representative: **Grünecker, Kinkeldey,
Stockmair & Schwanhäusser
Leopoldstrasse 4
80802 München (DE)**

(56) References cited:
**EP-A2- 1 835 003**

**Description**

The present invention relates to an acrylic pressure-sensitive adhesive tape having an acrylic pressure-sensitive adhesive layer.

2. Description of the Related Art

Conventionally, acrylic pressure-sensitive adhesive tapes having an acrylic pressure-sensitive adhesive layer have been widely used because they are excellent in light resistance, weather resistance, and oil resistance, etc., and also excellent in adhesive properties, such as adhesive force and cohesive force, etc, and aging resistance, such as heat resistance and weather resistance, etc. In particular, the acrylic pressure-sensitive adhesive tapes are applied to the adherends having high polarity, such as glass and stainless steel, etc., to the adherends having low (non) polarity, such as polypropylene and polyethylene, etc., and to the adherends that are hardly adhered to others, such as polystyrene and ABS (acrylonitrile butadiene styrene copolymer resin), etc., all of which are widely used for the materials in home electronic appliances, automobiles, and building materials (see Japanese Patent Application Publications Nos. 1998-509108, 1994-207151, 2001-49200, 2003-49130, 1994-200225, and 2005-239831 and Japanese Patent Application Publication (Translation of PCT Application) No. 1999-504054).

However, in the conventional acrylic pressure-sensitive adhesive tapes, the adhesiveness to the adherends that are hardly adhered to others, such as polystyrene and ABS, etc., is insufficient, and accordingly there is the challenge that the tapes can only be applied to a narrow range of adherends.

The present invention has been made in view of such a challenge, and a purpose of the invention is to provide an acrylic pressure-sensitive adhesive tape that has high adhesiveness to the adherends that are hardly adhered to others, such as polystyrene and ABS, etc. , and that can be applied to a wide range of adherends.

The present invention provides an acrylic pressure-sensitive adhesive tape comprising a pressure-sensitive adhesive layer containing

an acrylic polymer (A) having a mass average molecular weight (Mw) of from 100000 to 5000000 and containing, as a monomer unit, from 50 to 99.9% by mass of a (meth)acrylic acid alkyl ester having a linear or branched-chain $C_{1-20}$ alkyl group based on the total mass of the monomer components for preparing the acrylic polymer (A),

a (meth)acrylic polymer (B) whose mass average molecular weight (Mw) is such that $1000 \leq Mw < 30000$,

a fine particle (C), and

a bubble (D).

According to the acrylic pressure-sensitive adhesive tape of the aforementioned embodiment, the adhesiveness to the adherends that are hardly adhered to others, such as polystyrene and ABS, etc., can be improved, and accordingly the tape can be applied to a wider range of adherends and used in various applications.

In the acrylic pressure-sensitive adhesive tape according to the aforementioned embodiment, the pressure-sensitive adhesive layer may be a single layer. Alternatively, the acrylic pressure-sensitive adhesive tape may have multiple layers in which a pressure-sensitive adhesive layer and another pressure-sensitive adhesive layer that is different from the above layer are laminated.

Embodiments will now be described, by way of example only, with reference to the accompanying drawing, which is meant to be exemplary, not limiting, in which:

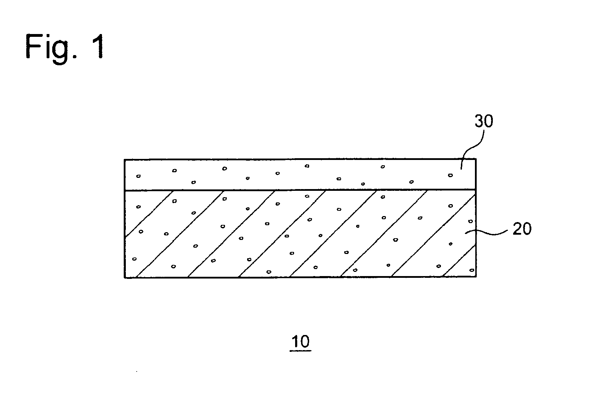

Fig. 1 is a schematic sectional view illustrating the configuration of an acrylic pressure-sensitive adhesive tape according to Embodiment 2.

The present invention will now be described by reference to the preferred embodiments. This does not intend to limit the scope of the present invention, but to exemplify the invention.

Hereinafter, an acrylic pressure-sensitive adhesive tape according to an embodiment of the invention will be described.

(Embodiment 1)

The acrylic pressure-sensitive adhesive tape according to Embodiment 1 has a single-layered pressure-sensitive adhesive layer containing a specific acrylic polymer (A), a (meth) acrylic polymer (B) whose mass average molecular weight (Mw) is such that $1000 \leq Mw < 30000$, a fine particle (C), and a bubble (D). Hereinafter, each component contained in the acrylic pressure-sensitive adhesive layer in the acrylic pressure-sensitive adhesive tape according to Embodiment 1 will be described in detail.

[Acrylic Polymer (A)]

The acrylic polymer (A) mainly functions as a pressure-sensitive adhesive composition. The acrylic polymer (A) contains, as a monomer unit, a (meth) acrylic acid alkyl ester having a linear or branched-chain $C_{1-20}$ alkyl group. In the acrylic polymer (A), the (meth) acrylic acid alkyl ester having $C_{1-20}$ alkyl group may be used alone or in combination of two or more thereof. The acrylic polymer (A) can be obtained by polymerizing (for example, solution polymerization, emulsion polymerization, or UV polymerization) the (meth) acrylic acid alkyl ester along with a polymerization initiator.

The ratio of the (meth)acrylic acid alkyl ester having a $C_{1-20}$ alkyl group is within a range of 50% by mass or more to 99. 9% by mass or less based on the total mass of the monomer components for preparing the acrylic polymer (A), preferably within a range of 60% by mass or more to 95% by mass or less, and more preferably within a range of 70% by mass or more to 93% by mass or less.

Examples of the (meth) acrylic acid alkyl ester having a $C_{1-20}$ alkyl group include, for example: (meth) acrylic acid $C_{1-20}$ alkyl esters [preferably (meth) acrylic acid $C_{2-14}$ alkyl ester, and more preferably (meth) acrylic acid $C_{2-10}$ alkyl ester], such as (meth)acrylic acid methyl, (meth)acrylic acid ethyl, (meth)acrylic acid propyl, (meth)acrylic acid isopropyl, (meth)acrylic acid butyl, (meth)acrylic acid isobutyl, (meth)acrylic acid s-butyl, (meth)acrylic acid t-butyl, (meth)acrylic acid pentyl, (meth)acrylic acid isopentyl, (meth)acrylic acid hexyl, (meth)acrylic acid heptyl, (meth)acrylic acid octyl, (meth)acrylic acid 2-ethylhexyl, (meth)acrylic acid isooctyl, (meth)acrylic acid nonyl, (meth)acrylic acid isononyl, (meth) acrylic acid decyl, (meth)acrylic acid isodecyl, (meth)acrylic acid undecyl, (meth)acrylic acid dodecyl, (meth)acrylic acid tridecyl, (meth)acrylic acid tetradecyl, (meth)acrylic acid pentadecyl, (meth)acrylic acid hexadecyl, (meth)acrylic acid heptadecyl, (meth)acrylic acid octadecyl, (meth) acrylic acid nonadecyl, and (meth)acrylic acid eicosyl, etc. Herein, the "(meth)acrylic acid alkyl ester" means an acrylic acid alkyl ester and/or a methacrylic acid alkyl ester, and all of the "(meth) ..." expressions have the same meaning.

Examples of the (meth)acrylic acid ester other than the (meth)acrylic acid alkyl ester include, for example:

(meth) acrylic acid esters having a alicyclic hydrocarbon group,
such as cyclopentyl(meth)acrylate, cyclohexyl(meth)acrylate,
and isobornyl (meth) acrylate, etc.; (meth)acrylic acid esters having an aromatic hydrocarbon group, such as phenyl (meth) acrylate, etc.; and (meth)acrylic acid esters obtained from an alcohol derived from a terpene compound, etc.

For the purpose of modifying cohesive force, heat resistance, and cross-linking property, the acrylic polymer (A) may contain, if necessary, another monomer component (copolymerizable monomer) that is copolymerizable with the (meth) acrylic acid alkyl ester. Accordingly, the acrylic polymer (A) may contain a copolymerizable monomer along with the (meth)acrylic acid alkyl ester as a major component. A monomer having a polar group can be preferably used as the copolymerizable monomer.

Specific examples of the copolymerizable monomer include: carboxyl group-containing monomers, such as acrylic acid, methacrylic acid, carboxy ethyl acrylate, carboxy pentyl acrylate, itaconic acid, maleic acid, fumaric acid, crotonic acid, and isocrotonic acid, etc.; hydroxyl group-containing monomers, such as (meth) acrylic acid hydroxyalkyls including (meth) acrylic acid hydroxyethyl, (meth) acrylic acid hydroxypropyl, (meth) acrylic acid hydroxybutyl, (meth) acrylic acid hydroxyhexyl, (meth)acrylic acid hydroxyoctyl, (meth)acrylic acid hydroxydecyl, (meth)acrylic acid hydroxylauryl, and (4-hydroxymethyl cyclohexyl)methyl methacrylate, etc.; acid anhydride group-containing monomers, such as maleic acid anhydride, and itaconic acid anhydride, etc.; sulfonic acid group-containing monomers, such as styrene sulfonic acid, allyl sulfonic acid, 2-(meth)acrylamide-2-methylpropanesulfonic acid, (meth)acrylamide propanesulfonic acid, sulfopropyl(meth)acrylate, and (meth)acryloyloxy naphthalene sulfonic acid, etc.; phosphate group-containing monomers, such as 2-hydroxyethyl acryloyl phosphate, etc.; (N-substituted)amide monomers, such as (meth)acrylamide, N,N-dimethyl(meth)acrylamide, N,N-diethyl(meth)acrylamide, N-isopropyl(meth)acrylamide, N-butyl(meth)acrylamide, N-methylol(meth)acrylamide, N-methylol propane (meth) acrylamide, N-methoxymethyl(meth)acrylamide, and N-butoxymethyl(meth)acrylamide, etc.; succinimide monomers, such as N-(meth)acryloyloxy methylene succinimide, N-(meth)acryloyl-6-oxy hexamethylene succinimide, and N-(meth)acryloyl-8-oxy hexamethylene succinimide, etc.; maleimide monomers, such as N-cyclohexyl maleimide, N-isopropylmaleimide, N-lauryl maleimide, and N-phenyl maleimide, etc.; itaconimide monomers, such as N-methylitaconimide, N-ethylitaconimide, N-butylitaconimide, N-octylitaconimide, N-2-ethylhexylitaconimide, N-cyclohexylitaconimide, and N-laurylitaconimide, etc.; vinyl esters, such as vinyl acetate and vinyl propionate, etc.; nitrogen-containing heterocyclic monomers, such as N-vinyl-2-pyrrolidone, N-methylvinylpyrrolidone, N-vinylpyridine, N-vinylpiperidone, N-vinylpyrimidine, N-vinylpiperazine, N-vinylpyrazine, N-vinylpyrrole, N-vinylimidazole, N-vinyloxazole, N-(meth)acryloyl-2-pyrrolidone, N-(meth)acryloylpiperidine, N-(meth)acryloylpyrrolidine, and N-vinyl morpholine, etc.; N-vinyl carboxylic acid amides; lactam monomers, such as N-vinyl caprolactam, etc.; cyanoacrylate monomers, such as acrylonitrile and methacrylonitrile, etc.; (meth)acrylic acid aminoalkyl monomers, such as (meth)acrylic acid aminoethyl, (meth)acrylic acid N,N-dimethylaminoethyl, (meth)acrylic acid N,N-dimethylaminoethyl, and (meth)acrylic acid t-butylaminoethyl, etc.; (meth)acrylic acid alkoxy alkyl monomers, such as (meth)acrylic acid methoxyethyl, and (meth)acrylic acid ethoxyethyl, etc.; styrene monomers, such as styrene and α-methylstyrene, etc.; epoxy group-containing acrylic monomers, such as (meth)acrylic acid glycidyl, etc.; glycol acrylic ester monomers, such as (meth)acrylic acid polyethylene glycol, (meth)acrylic acid polypropylene glycol, (meth)acrylic acid methoxy ethylene glycol, and (meth)acrylic acid methoxy polypropylene glycol, etc.; acrylic acid ester monomers having a heterocycle, halogen atom, silicon atom, or the like, such as (meth)acrylic acid tetrahydrofurfuryl, fluoride(meth)acrylate, and silicone(meth)acrylate, etc.; olefin monomers, such as isoprene, butadiene, and isobutylene, etc. ; vinyl ether monomers, such as methyl vinyl ether, and ethyl vinyl ether, etc.; thioglycolic acid; vinyl esters, such as vinyl acetate, and vinyl propionate, etc.; aromatic vinyl compounds such as styrene, and vinyl toluene, etc.; olefins or dienes, such as ethylene, butadiene, isoprene, and isobutylene, etc.; vinyl ethers, such as vinyl alkyl ether, etc.; vinyl chloride; (meth)acrylic acid alkoxy alkyl monomers, such as (meth)acrylic acid methoxyethyl and (meth)acrylic acid ethoxyethyl, etc.; sulfonic acid group-containing monomers such as vinyl sulfonate sodium, etc.; imide group-containing monomers, such as cyclohexyl maleimide and isopropyl maleimide, etc.; isocyanate group-containing monomers, such as 2-isocyanate ethyl(meth) acrylate, etc.; fluorine atom-containing (meth)acrylates; and silicon atom-containing (meth)acrylates, etc. These copolymerizable monomers can be used alone or in combination of two or more thereof.

When the acrylic polymer (A) contains a copolymerizable monomer along with the (meth) acrylic acid alkyl ester as a major component, carboxyl group-containing monomers can be preferably used. Among them, an acrylic acid can be preferably used. The use amount of the copolymerizable monomer is not particularly limited, but the copolymerizable monomer can be usually contained in an amount within a range of 0.1 to 30% by mass based on the total mass of the monomer components for preparing the acrylic polymer (A), preferably in an amount within a range of 0.5 to 20% by mass, and more preferably in an amount within a range of 1 to 15% by mass.

By containing the copolymerizable monomer in an amount of 0.1% by mass or more, a decrease in the cohesive force of the acrylic pressure-sensitive adhesive tape can be prevented and high shear force can be obtained. Further, by making the content of the copolymerizable monomer to be 30% by mass or less, it can be prevented that the cohesive force may become too high and the tackiness at normal temperature (25°C) can be improved.

A polyfunctional monomer may be contained, if necessary, in the acrylic polymer (A) in order to adjust the cohesive force of the pressure-sensitive adhesive layer to be formed.

Examples of the polyfunctional polymer include, for example: (poly)ethylene glycol di(meth)acrylate, (poly)propylene glycol di(meth)acrylate, neopentyl glycol di(meth)acrylate, pentaerythritol di(meth)acrylate, pentaerythritol tri(meth)acrylate, dipentaerythritol hexa(meth)acrylate, 1,2-ethylene glycol di(meth)acrylate, 1,6-hexanediol di(meth)acrylate, 1,12-dodecane diol di(meth)acrylate, trimethylolpropane tri(meth)acrylate, tetramethylol methane tri(meth)acrylate, allyl(meth)acrylate, vinyl(meth)acrylate, divinylbenzene, epoxy acrylate, polyester acrylate, urethane acrylate, butyl di (meth)acrylate, and hexyl di(meth)acrylate, etc. Among them, trimethylolpropane tri(meth)acrylate, hexanediol di(meth) acrylate, and dipentaerythritol hexa(meth)acrylate can be preferably used. The polyfunctional (meth)acrylates can be used alone or in combination of two or more thereof.

The use amount of the polyfunctional monomer is changed depending on the molecular weight or the number of functional groups thereof, but the polyfunctional monomer is added in an amount within a range of 0.01 to 3.0% by mass based on the total mass of the monomer components for preparing the acrylic polymer (A), preferably in an amount within a range of 0.02 to 2.0% by mass, and more preferably in an amount within a range of 0.03 to 1.5% by mass.

If the use amount of the polyfunctional monomer exceeds 3.0% by mass based on the total mass of the monomer components for preparing the acrylic polymer (A), for example, the cohesive force of the pressure-sensitive adhesive layer may become too high and accordingly there are sometimes the cases where the adhesive force may be decreased. On the other hand, the use amount thereof is below 0.01% by mass, for example, there are sometimes the cases where the cohesive force of the pressure-sensitive adhesive layer may be decreased.

<Polymerization Initiator>

In preparing the acrylic polymer (A), the acrylic polymer (A) can be easily formed by a curing reaction using heat or ultraviolet rays with the use of a polymerization initiator, such as thermal polymerization initiator, photo-polymerization initiator (photo-initiator), or the like. In particular, a photo-polymerization initiator can be preferably used in terms of the advantage that a polymerization time can be shortened. The polymerization initiators can be used alone or in combination of two or more thereof.

Examples of the thermal polymerization initiator include, for example: azo polymerization initiators [for example, 2,2'-azobisisobutyronitrile, 2,2'-azobis-2-methylbutyronitrile, 2,2'-azobis(2-methylpropionic acid)dimethyl, 4,4'-azobis-4-cyanovalerianic acid, azobis isovaleronitrile, 2,2'-azobis(2-amidinopropane)dihydrochloride, 2,2'-azobis[2-(5-methyl-2-imidazoline-2-yl) propane]dihydrochloride, 2,2'-azobis(2-methylpropionamidine)disulfate, and 2,2'-azobis (N,N'-dimethyleneisobutylamidine)dihydrochloride, etc.]; peroxide polymerization initiators (for example, dibenzoyl peroxide, t-butyl permaleate, and lauroyl peroxide, etc.); and redox polymerization initiator, etc.

The use amount of the thermal polymerization initiator is not particularly limited, and only has to be within a conventional range in which it can be used as a thermal polymerization initiator.

The photo-polymerization initiator is not particularly limited, but, for example, a benzoin ether photo-polymerization initiator, acetophenone photo-polymerization initiator, α -ketol photo-polymerization initiator, aromatic sulfonyl chloride photo-polymerization initiator, photoactive oxime photo-polymerization initiator, benzoin photo-polymerization initiator, benzyl photo-polymerization initiator, benzophenone photo-polymerization initiator, ketal photo-polymerization initiator, thioxanthone photo-polymerization initiator, acylphosphine oxide photo-polymerization initiator, or the like, can be used.

Specific examples of the benzoin ether photo-polymerization initiator include, for example: benzoin methyl ether, benzoin ethyl ether, benzoin propyl ether, benzoin isopropyl ether, benzoin isobutyl ether, 2,2-dimethoxy-1,2-diphenylethane-1-one [made by BASF, product name: IRGACURE 651], and anisole methyl ether, etc. Specific examples of the acetophenone photo-polymerization initiator include, for example: 1-hydroxycyclohexyl phenyl ketone [made by BASF, product name: IRGACURE 184], 4-phenoxy dichloroacetophenone, 4-t-butyl-dichloroacetophenone, 1-[4-(2-hydroxyethoxy)-phenyl]-2-hydroxy-2-methyl-1-propane-1 -one [made by BASF, product name: IRGACURE 2959], 2-hydroxy-2-methyl-1-phenyl-propane-1-one [made by BASF, product name: DAROCUR 1173], and methoxy acetophenone, etc. Specific examples of the α-ketol photo-polymerization initiator include, for example: 2-methyl-2-hydroxy propiophenone and 1-[4-(2-hydroxyethyl)-phenyl]-2-hydroxy-2-methylpropane-1-one, etc. Specific examples of the aromatic sulfonyl chloride photo-polymerization initiator include, for example, 2-naphthalene sulfonyl chloride, etc. Specific examples of the photoactive oxime photo-polymerization initiator include, for example, 1-phenyl-1,1-propanedione-2-(o-ethoxycarbonyl)-oxime, etc.

Specific examples of the benzoin photo-polymerization initiator include, for example, benzoin, etc. Specific examples of the benzyl photo-polymerization initiator include, for example, benzyl, etc. Specific examples of the benzophenone photo-polymerization initiators include, for example, benzophenone, benzoylbenzoic acid, 3,3'-dimethyl-4-methoxybenzophenone, polyvinyl benzophenone, and α-hydroxy cyclohexyl phenyl ketone, etc. Specific examples of the ketal photo-polymerization initiator include, for example, benzyl dimethyl ketal, etc. Specific examples of the thioxanthone photo-polymerization initiator include, for example, thioxanthone, 2-chlorothioxanthone, 2-methyl thioxanthone, 2, 4-dimethyl thioxanthone, isopropyl thioxanthone, 2,4-dichloro thioxanthone, 2,4-diethyl thioxanthone, isopropyl thioxanthone, 2,4-diisopropyl thioxanthone, and dodecyl thioxanthone, etc.

Examples of the acylphosphine photo-polymerization initiator include, for example:

bis (2,6-dimethoxybenzoyl)phenylphosphine oxide,
bis (2,6-dimethoxybenzoyl)(2,4,4-trimethylpentyl) phosphine oxide, bis (2,6-dimethoxybenzoyl)-n-butyl phosphine oxide,
bis (2,6-dimethoxybenzoyl)-(2-methylpropane-1-yl)phosphine oxide, bis (2,6-dimethoxybenzoyl)-(1-methylpropane-1-yl) phosphine oxide, bis (2,6-dimethoxybenzoyl)-t-butylphosphine oxide, bis(2,6-dimethoxybenzoyl) cyclohexylphosphine oxide,
bis (2,6-dimethoxybenzoyl) octylphosphine oxide,
bis (2-methoxybenzoyl) (2-methylpropane-1-yl)phosphine oxide,
bis (2-methoxybenzoyl) (1-methylpropane-1-yl)phosphine oxide,
bis (2,6-diethoxybenzoyl) (2-methylpropane-1-yl) phosphine oxide,
bis (2,6-diethoxybenzoyl) (1-methylpropane-1-yl) phosphine oxide,
bis (2,6-dibutoxybenzoyl) (2-methylpropane-1-yl) phosphine oxide,
bis (2,4-dimethoxybenzoyl) (2-methypropane-1-yl) phosphine oxide,
bis (2,4, 6-trimethylbenzoyl) (2,4-dipentoxyphenyl) phosphine
oxide, bis (2,6-dimethoxybenzoyl) benzyl phosphine oxide,
bis(2,6-dimethoxybenzoyl)-2-phenylpropyl phosphine oxide,
bis(2,6-dimethoxybenzoyl)-2-phenylethyl phosphine oxide,
bis(2,6-dimethoxybenzoyl)benzyl phosphine oxide,
bis(2,6-dimethoxybenzoyl)-2-phenylpropyl phosphine oxide,
bis(2,6-dimethoxybenzoyl)-2-phenylethyl phosphine oxide,
2,6-dimethoxybenzoyl benzylbutylphosphine oxide,
2,6-dimethoxybenzoyl benzyloctylphosphine oxide,
bis(2,4,6-trimethylbenzoyl)-2,5-diisopropylphenylphosphine
oxide, bis(2,4,6-trimethylbenzoyl)-2-methylphenylphosphine
oxide, bis(2,4,6-trimethylbenzoyl)-4-methylphenylphosphine
oxide, bis(2,4,6-trimethylbenzoyl)-2,5-diethylphenylphosphine oxide,
bis(2,4,6-trimethylbenzoyl)-2,3,5,6-tetramethylphenylphosphin e oxide, bis(2,4,6-trimethyl benzoyl)-2,4-di-n-butoxy phenylphosphine oxide, 2,4,6-trimethylbenzoyl
diphenylphosphine oxide,

bis (2,6-dimethoxybenzoyl)-2,4,4-trimethylpentylphosphine oxide, bis (2,4,6-trimethylbenzoyl) isobutylphosphine oxide, 2,6-dimethoxybenzoyl-2,4,6-trimethylbenzoyl-n-butylphosphine oxide, bis(2,4,6-trimethylbenzoyl)phenylphosphine oxide, bis(2,4,6-trimethylbenzoyl)-2,4-dibutoxyphenylphosphine oxide, 1,10-bis[bis(2,4,6-trimethylbenzoyl)phosphine oxide]decane, and tri(2-methylbenzoyl)phosphine oxide, etc.

Among them, bis(2,4,6-trimethylbenzoyl)phenylphosphine oxide [made by BASF, product name: IRGACURE 819], bis(2,4,6-trimethylbenzoyl)-2,4-di-n-butoxyphenylphosphine oxide, 2,4,6-trimethylbenzoyl diphenylphosphine oxide [made by BASF, product name: Lucirin TPO], and bis(2,6-dimethoxybenzoyl)-2,4,4-trimethylpentylphosphine oxide, are particularly preferred.

The use amount of the photo-polymerization initiator is not particularly limited, but the photo-polymerization initiator is combined in an amount within a range of, for example, 0.01 to 5 parts by mass based on 100 parts by mass of the monomer components for preparing the acrylic polymer (A), preferably in an amount within a range of 0.03 to 3 parts by mass, and more preferably in an amount within a range of 0.05 to 2 parts by mass.

If the use amount of the photo-polymerization initiator is below 0.01 parts by mass, there are sometimes the cases where a polymerization reaction is insufficient. If the use amount thereof exceeds 5 parts by mass, there is the fear that, because the photo-polymerization initiator absorbs an ultraviolet ray, an ultraviolet ray may not reach the inside of the pressure-sensitive adhesive layer, thereby causing a decrease in the polymerization ratio. With the molecular weight of the polymer to be generated becoming small, there is the fear that the cohesive force of the pressure-sensitive adhesive layer to be formed may become low. The photo-polymerization initiators may be used alone or in combination of two or more thereof.

Besides the aforementioned polyfunctional monomers, a cross-linking agent can also be used for adjusting the cohesive force. Commonly-used cross-linking agents can be used as the cross-linking agent. Examples of the cross-linking agents include, for example: epoxy cross-linking agent, isocyanate cross-linking agent, silicone cross-linking agent, oxazoline cross-linking agent, aziridine cross-linking agent, silane cross-linking gent, alkyl-etherified melamine cross-linking agent, and metal chelate cross-linking agent, etc. Among them, in particular, the isocyanate cross-linking agent and epoxy cross-linking agent can be preferably used.

Specific examples of the isocyanate cross-linking agent include: tolylene diisocyanate, hexamethylene diisocyanate, isophorone diisocyanate, xylylene diisocyanate, hydrogenated xylylene diisocyanate, diphenylmethane diisocyanate, hydrogenated diphenylmethane diisocyanate, tetramethyl xylylene diisocyanate, naphthalene diisocyanate, triphenylmethane triisocyanate, polymethylene polyphenyl isocyanate, and these adducts with polyols, such as trimethylolpropane, etc.

Examples of the epoxy cross-linking agent include: bisphenol A, epichlorohydrin type epoxy resin, ethyleneglycidylether, polyethylene glycol diglycidyl ether, glycerin diglycidyl ether, glycerin triglycidyl ether, 1,6-hexanediol glycidyl ether, trimethylolpropane triglycidyl ether, diglycidyl aniline, diamine glycidyl amine, N,N,N',N'-tetraglycidyl-m-xylylenediamine, and 1,3-bis(N,N'-diamine glycidyl aminomethyl)cyclohexane, etc.

In the present embodiment, the acrylic polymer (A) can also be prepared as a partial polymer (acrylic polymer syrup) that can be obtained by radiating ultraviolet (UV) rays onto a mixture in which the aforementioned monomer components and the polymerization initiator have been combined, so that part of the monomer is polymerized. The polymerization can also be completed by preparing an acrylic pressure-sensitive adhesive composition that has been made by combining the later-described component (B) into the acrylic polymer syrup and then by coating the acrylic pressure-sensitive adhesive composition to be irradiated with UV rays. The mass average molecular weight (Mw) of the acrylic polymer (A) is within a range of 100000 to 5000000.

[(Meth)Acrylic Polymer (B)]

The (meth)acrylic polymer (B) functions as a tackifier resin and has the advantage that the inhibition of polymerization hardly occurs when UV polymerization is performed.

The addition amount of the (meth)acrylic polymer (B) is preferably within a range of 5 to 45 parts by mass based on 100 parts by mass of the acrylic polymer (A), and more preferably within a range of 10 to 30 parts by mass. If the (meth)acrylic polymer (B) is added in an amount more than 45 parts by mass, the elastic modulus of the pressure-sensitive adhesive layer becomes high, and accordingly there are sometimes the cases where the adhesive performance at low temperature may become poor or the adhesiveness may not be demonstrated even at normal temperature. On the other hand, if the addition amount thereof is below 5 parts by mass, there are sometimes the cases where the effects of the (meth)acrylic polymer (B) may not be obtained.

The glass transition temperature (Tg) of the (meth) acrylic polymer (B) is such that $20°C \leq Tg$, preferably such that $30°C \leq Tg$, and more preferably such that $40°C \leq Tg$. If the glass transition temperature (Tg) thereof is below $20°C$, the cohesive force of the pressure-sensitive adhesive layer is decreased at normal temperature or higher, and accordingly there are sometimes the cases where the holding performance or high-temperature adhesive performance may be decreased.

In the present invention, the glass transition temperatures of typical materials that can be used as the (meth) acrylic polymer (B) are shown in the following table. The glass transition temperature of another material (composition) , which is not shown in the following table, can be defined as the glass transition temperature represented by the following equation (Fox equation) :

$$1/Tg = \Sigma(W_i/Tg_i)$$

wherein Tg represents the glass transition temperature of the (meth)acrylic polymer (B) (unit: K), $Tg_i$ represents the glass transition temperature at which monomer i forms a homopolymer (unit: K), and $W_1$ represents the mass fraction of the monomer i in the whole monomer components (i = 1, 2,..., n). The above equation is a computation equation applied to the case where the (meth)acrylic polymer (B) is formed of n types of monomers of a monomer 1, monomer 2,..., and monomer n.

[Table 1]

| COMPOSITION OF (METH) ACRYLIC POLYMER (B) | GLASS TRANSITION TEMPERATURE (Tg) [ºC] | REMARKS |
|---|---|---|
| DCPMA | 175 | VALUE DESCRIBED IN BROCHURE, DOCUMENT OR THE LIKE |
| DCPA | 120 | VALUE DESCRIBED IN BROCHURE, DOCUMENT OR THE LIKE |
| IBXMA | 173 | VALUE DESCRIBED IN BROCHURE, DOCUMENT OR THE LIKE |
| IBXA | 97 | VALUE DESCRIBED IN BROCHURE, DOCUMENT OR THE LIKE |
| CHMA | 66 | VALUE DESCRIBED IN BROCHURE, DOCUMENT OR THE LIKE |
| MMA | 105 | VALUE DESCRIBED IN BROCHURE, DOCUMENT OR THE LIKE |
| ADMA | 250 | VALUE DESCRIBED IN BROCHURE, DOCUMENT OR THE LIKE |
| ADA | 153 | VALUE DESCRIBED IN BROCHURE, DOCUMENT OR THE LIKE |
| IBMA | 31 | VALUE DESCRIBED IN BROCHURE, DOCUMENT OR THE LIKE |
| DCPMA/IBXMA | 174 | COMPUTATION EQUATION (FROM Fox EQUATION) |
| DCPMA/MMA40 | 144 | COMPUTATION EQUATION (FROM Fox EQUATION) |

(continued)

| COMPOSITION OF (METH) ACRYLIC POLYMER (B) | GLASS TRANSITION TEMPERATURE (Tg) [ºC] | REMARKS |
|---|---|---|
| DCPMA/MMA60 | 130 | COMPUTATION EQUATION (FROM Fox EQUATION) |
| IBXMA/MMA60 | 130 | COMPUTATION EQUATION (FROM Fox EQUATION) |
| ADMA/MMA | 180 | COMPUTATION EQUATION (FROM Fox EQUATION) |
| ADA/MMA | 132 | COMPUTATION EQUATION (FROM Fox EQUATION) |

The abbreviations in Table 1 represent the following compounds.

DCPMA: Dicyclopentanyl methacrylate
DCPA: Dicyclopentanyl acrylate
IBXMA: Isobornyl methacrylate
IBXA: Isobornyl acrylate
CHMA: Cyclohexyl methacrylate
MMA: Methyl methacrylate
ADMA: Adamantyl methacrylate
ADA: 1-Adamantyl acrylate
IBMA: Isobutyl methacrylate

The mass average molecular weight (Mw) of the (meth) acrylic polymer (B) is such that $1000 \leq Mw < 30000$, preferably such that $2000 \leq Mw < 20000$, and more preferably such that $3000 \leq Mw < 10000$.

If the molecular weight of the (meth)acrylic polymer (B) is 30000 or more, there are sometimes the cases where the sufficient effect of improving the adhesive performance in the pressure sensitive adhesive tape may not be obtained. On the other hand, if the molecular weight thereof is below 1000, the molecular weight becomes too low, and hence there are sometimes the cases where the adhesive performance and holding performance of the pressure-sensitive adhesive tape may be decreased.

A mass average molecular weight can be measured by polystyrene conversion with the use of the GPC method. Specifically, a mass average molecular weight can be measured by using the HPLC 8020 made by TOSOH CORPORATION and two TSKgelGMH-H (20) columns and at a flow rate of 0.5 ml/min using tetrahydrofuran solvent.

<Method of Producing (Meth)Acrylic Polymer (B)>

The (meth)acrylic polymer (B) can be produced by, for example, polymerizing a (meth) acrylic acid ester with a solution polymerization method, bulk polymerization method, emulsion polymerization method, suspension polymerization method, mass polymerization method, or the like.

Examples of such a (meth)acrylic acid ester include:

(meth)acrylic acid alkyl esters, such as (meth)acrylic acid methyl, (meth)acrylic acid ethyl, (meth)acrylic acid propyl, (meth)acrylic acid butyl, (meth)acrylic acid isobutyl,
(meth)acrylic acid pentyl, (meth)acrylic acid hexyl,
(meth)acrylic acid-2-ethylhexyl, (meth)acrylic acid octyl,
(meth)acrylic acid nonyl, (meth)acrylic acid decyl, and
(meth)acrylic acid dodecyl; esters of (meth)acrylic acids with alicyclic alcohols, such as cyclohexyl(meth)acrylate and (meth) acrylic acid isobornyl; and (meth) acrylic acid aryl esters,
such as (meth) acrylic acid phenyl and (meth) acrylic acid benzyl.
These (meth)acrylic acid esters can be used alone or in combination of them.

Cyclohexyl methacrylate can be preferably used as a monomer unit that forms the (meth)acrylic polymer (B).

Other than the above component unit of (meth) acrylic acid ester, the (meth)acrylic polymer (B) can also be obtained by copolymerizing a monomer having a polymerizable unsaturated bond that is copolymerizable with (meth)acrylic acid ester.

Examples of the monomer having a polymerizable unsaturated bond that is copolymerizable with (meth)acrylic acid ester include: (meth) acrylic acid alkoxyalkyls, such as (meth)acrylic acid, (meth) acrylic acid methoxyethyl, (meth) acrylic acid ethoxyethyl, (meth) acrylic acid propoxyethyl, (meth) acrylic acid butoxyethyl, and (meth)acrylic acid ethoxypropyl; salts, such as (meth)acrylic acid alkali metal salt, etc.; di(meth)acrylic acid esters of (poly)alkylene glycols, such as di(meth)acrylic acid ester of ethylene glycol, di(meth)acrylic acid ester of diethylene glycol, di(meth)acrylic acid ester of triethylene glycol, di(meth)acrylic acid ester of polyethylene glycol, di(meth)acrylic acid ester of propylene glycol, di (meth)acrylic acid ester of dipropylene glycol, and di(meth)acrylic acid ester of tripropylene glycol; poly(meth)acrylic acid esters, such as trimethylolpropane tri(meth)acrylic acid ester; (meth)acrylonitrile; vinyl acetate; vinylidene chloride; halogenated vinyl compounds, such as (meth) acrylic acid-2-chloroethyl; oxazoline group-containing polymerizable compounds, such as 2-vinyl-2-oxazoline, 2-vinyl-5-methyl-2-oxazoline, and 2-isopropenyl-2-oxazoline; aziridine group-containing polymerizable compounds, such as (meth)acryloylaziridine, (meth) acrylic acid-2-aziridinylethyl; epoxy group-containing vinyl monomers, such as allyl glycidyl ether, (meth)acrylic acid glycidyl ether and (meth)acrylic acid-2-ethyl glycidyl ether; hydroxyl group-containing vinyl monomers, such as (meth)acrylic acid-2-hydroxyethyl, (meth) acrylic acid-2-hydroxypropyl, monoesters of (meth) acrylic acids with polypropylene glycol or polyethylene glycol, and adducts of lactones with (meth)acrylic acid-2-hydroxyethyl; fluorine-containing vinyl monomers, such as fluorine-substituted (meth) acrylic acid alkyl ester; unsaturated carboxylic acids including itaconic acid, crotonic acid, maleic acid, and fumaric acid, salts thereof, (partial)ester compounds thereof, and acid anhydrides thereof; reactive halogen-containing vinyl monomers, such as 2-chloroethyl vinyl ether and monochloro vinyl acetate; amide group-containing vinyl monomers, such as methacrylamide, N-methylol methacrylamide, N-methoxyethyl methacrylamide, N-butoxymethyl methacrylamide, and N-acryloyl morpholine; organic silicon-containing vinyl monomers, such as vinyltrimethoxysilane, γ-methacryloxpropyl trimethoxy silane, allyltrimethoxysilane, trimethoxysilylpropylallylamine, and 2-methoxy ethoxy trimethoxy silane; and in addition to the above compounds, macro monomers in which vinyl groups are polymerized that have a radical polymerizable vinyl group at the terminal thereof. These monomers may be copolymerized, alone or in combination of them, with the aforementioned (meth)acrylic acid ester.

In the acrylic pressure-sensitive adhesive tape according to the present embodiment, for example, the copolymer of cyclohexyl methacrylate (CHMA) and isobutyl methacrylate (IBMA), that of cyclohexyl methacrylate (CHMA) and isobornyl methacrylate (IBXMA), that of cyclohexyl methacrylate (CHMA) and acryloyl morpholine (ACMO), and that of cyclohexyl methacrylate (CHMA) and diethylacrylamide (DEAA), are preferred as the (meth)acrylic polymer (B) in terms that an acrylic pressure-sensitive adhesive tape excellent in the adhesiveness to the adherends that are hardly adhered to others, such as polystyrene and ABS, etc., can be provided.

As the composition ratio of the copolymer that forms the (meth) acrylic polymer (B), the content of cyclohexyl methacrylate (CHMA) is within a range of 50 to 85% by mass, and preferably within a range of 55 to 75% by mass; and that of isobutyl methacrylate (IBMA), isobornyl methacrylate (IBXMA), acryloyl morpholine (ACMO), or diethylacrylamide (DEAA) is within a range of 15 to 50% by mass, and preferably within a range of 25 to 45% by mass.

In addition, a functional group that is reactive with an epoxy group or isocyanate group may be introduced into the (meth)acrylic polymer (B). Examples of such a functional group include a hydroxyl group, carboxyl group, amino group, amide group, and mercapto group. In producing the (meth) acrylic polymer (B), it is preferable to use a monomer having such a functional group.

<Method of Adjusting Molecular Weight of (Meth)Acrylic Polymer (B) >

For the adjustment of the molecular weight of the (meth)acrylic polymer (B), a chain transfer agent can be used during the polymerization of the polymer (B). Examples of the chain transfer agent to be used include: compounds having a mercapto group, such as octyl mercaptan, dodecyl mercaptan, and t-dodecyl mercaptan, etc.; thioglycolic acid, thioglycolic acid ethyl, thioglycolic acid propyl, thioglycolic acid butyl, thioglycolic acid t-butyl, thioglycolic acid 2-ethylhexyl, thioglycolic acid octyl, thioglycolic acid decyl, thioglycolic acid dodecyl, thioglycolic acid ester of ethylene glycol, thioglycolic acid ester of neopentyl glycol, and thioglycolic acid ester of pentaerythritol. Among them, thioglycolic acids can be preferably used.

The use amount of the chain transfer agent is not particularly limited, but the agent is usually contained in an amount within a range of 0.1 to 20 parts by mass based on 100 parts by mass of the acrylic monomer, preferably in an amount within a range of 0.2 to 15 parts by mass, and more preferably in an amount within a range of 0.3 to 10 parts by mass. By adjusting the addition amount of the chain transfer agent as stated above, the (meth) acrylic polymer (B) having a preferred molecular weight can be obtained.

[Fine Particle (C)]

The fine particles (C) have operational effects of improving the shear adhesive force and processability of the acrylic pressure-sensitive adhesive tape.

Examples of the fine particles (C) include: metallic particles, such as copper, nickel, aluminum, chromium, iron, and stainless steel, etc., and metal oxide particles thereof; carbide particles, such as silicon carbide, boron carbide, and carbon nitride, etc., and nitride particles, such as aluminum nitride, silicon nitride, and boron nitride, etc.; ceramic particles represented by oxides, such as glass, alumina, and zirconium, etc.; inorganic fine particles, such as calcium carbide, aluminum hydroxide, glass, and silica, etc.; natural material particles, such as volcanic Shirasu and sand, etc.; polymer particles of polystyrene, polymethyl methacrylate, phenol resin, benzoguanamine resin, urea resin, silicone resin, nylon, polyester, polyurethane, polyethylene, polypropylene, polyamide, and polyimide, etc. ; organic hollow bodies of vinylidene chloride and acrylic, etc.; and organic spheres, such as nylon bead, acrylic bead, and silicone bead, etc.

Hollow fine particles can be preferably used as the fine particle (C). Among hollow fine particles, hollow inorganic fine particles can be preferably used in terms of the efficiency of the polymerization using an ultraviolet reaction and weight. Examples of the hollow inorganic fine particles include: glass balloons, such as hollow glass balloons, etc.; hollow balloons made of metallic compound, such as hollow alumina balloons, etc. ; and hollow balloons made of porcelain, such as hollow ceramic balloons, etc. High adhesive force can be improved without impairing other properties such as shear force and holding force, etc., by using the above hollow glass balloons.

Examples of the hollow glass balloons include, for example, ones: with a product name of "Glass Microballoon" (made by FUJI SILYSIA CHEMICAL LTD.); with product names of "CEL-STAR Z-20", "CEL-STAR Z-27", "CEL-STAR CZ-31T", "CEL-STAR Z-36", "CEL-STAR Z-39", "CEL-STAR T-36", and "CEL-STAR PZ-6000" (each of them is made by Tokai Kogyo Co., Ltd.); and with a product name of "SILUX•FINE BALLOON" (made by FINE-BALLOON Ltd.), etc.

The size of the fine particle (C) (average particle size) is not particularly limited, but can be selected from a range of, for example, 1 to 500 $\mu$m, preferably from a range of 5 to 200 $\mu$m, and more preferably from a range of 10 to 150 $\mu$m.

The specific gravity of the fine particle (C) is not particularly limited, but can be selected from a range of, for example, 0.1 to 1.8 g/cm$^3$, preferably from a range of 0.2 to 1.5 g/cm$^3$, and more preferably from a range of 0.2 to 0.5 g/cm$^3$.

If the specific gravity of the fine particle (C) is smaller than 0.1 g/cm$^3$, floating of the fine particles becomes remarkable when combining and mixing the fine particles (C) into the acrylic adhesive, and accordingly there are sometimes the cases where it is difficult to uniformly scatter the fine particles. In addition, because the strength of the glass becomes low, it will easily crack. Conversely, if the specific gravity thereof is larger than 1.8 g/cm$^3$, the transmission rate of an ultraviolet ray is decreased, and accordingly there is the fear that the efficiency of the ultraviolet reaction may be decreased. In addition, because the weight of the acrylic pressure-sensitive adhesive tape becomes large, the workability becomes poor.

The use amount of the fine particles (C) is not particularly limited. If the use amount thereof is below, for example, 10% by volume based on the whole volume of the pressure sensitive adhesive layer, the effect of the addition of the fine particles (C) is low. On the other hand, if the use amount thereof exceeds 50% by volume based on the whole volume of the pressure-sensitive adhesive layer, the adhesive force is decreased.

[Bubble (D)]

By containing the bubbles (D) in the pressure-sensitive adhesive layer, the acrylic pressure-sensitive adhesive tape can exhibit good adhesiveness to a curved surface and concave-convex surface, and also exhibit good resistance to resilience.

It is desirable that the bubbles (D) contained in the pressure-sensitive adhesive layer are basically closed-cell type bubbles, but closed-cell type bubbles and interconnected-cell type bubbles may coexist.

Although the bubble (D) usually has a spherical shape (in particular, a true spherical shape), the shape does not necessarily have to have a true spherical shape and accordingly there may be concavities and convexities on the sphere. The average bubble size (diameter) of the bubble (D) is not particularly limited, but can be selected from a range of, for example, 1 to 1000 $\mu$m, preferably from a range of 10 to 500 $\mu$m, and more preferably from a range of 30 to 300 $\mu$m.

A gas component contained in the bubble (D) (gas component of which the bubble (D) is formed; sometimes referred to as a "bubble-forming gas") is not particularly limited, but various gas components, such as inactive gases including nitrogen, carbon dioxide, and argon, etc., and air, etc., can be used. When a polymerization reaction is performed in a state where a gas that forms the bubbles (D) is contained, it is important that the gas that forms the bubbles (D) does not hamper the reaction. Nitrogen can be preferably used as a gas that forms the bubbles (D) in terms of not hampering a polymerization reaction and cost.

The amount of the bubbles (D) contained in the pressure-sensitive adhesive layer is not particularly limited, but can be appropriately selected in accordance with the use purpose thereof. For example, the use amount thereof is within a range of 5 to 50% by volume based on the whole volume of the pressure-sensitive adhesive layer containing the bubbles (D), and preferably within a range of 8 to 40% by volume. If the mixing amount thereof is below 5% by volume, the effect of mixing the bubbles (D) cannot be obtained. Conversely, if the mixing amount thereof exceeds 50% by volume, there occur the bubbles (D) each penetrating through the pressure-sensitive adhesive layer, and accordingly the adhesive performance and the appearance are decreased.

In the pressure-sensitive adhesive layer containing the bubbles (D), the form in which the bubbles are formed is not particularly limited. The pressure-sensitive adhesive layer containing the bubbles (D) can be formed, for example, in the following ways: (1) the pressure-sensitive adhesive layer containing the bubbles (D) can be formed by using the pressure-sensitive adhesive layer in which a gas component that will form the bubbles (D) (a bubble-forming gas) has been mixed beforehand; and (2) the pressure-sensitive adhesive layer in which the bubbles (D) are formed can be formed by mixing a foaming agent into the pressure-sensitive adhesive layer. When the latter way (2) is used, the foaming agent is not particularly limited, but can be appropriately selected from publicly-known foaming agents. For example, heat-expandable micro-spheres can be used as a foaming agent.

<Other Components>

Besides the aforementioned components, a thickener, a thixotropic agent, and fillers, etc., may be added in the pressure-sensitive adhesive layer, if needed. Examples of the thickener include acrylic rubber, epichlorohydrin rubber, and butyl rubber, etc. Examples of the thixotropic agent include colloid silica and polyvinylpyrrolidone, etc. Examples of the fillers include calcium carbonate, titanium oxide, and clay, etc. Other than those, a plasticizer, anti-aging agent, antioxidant, etc. may be appropriately added. Additives to be added should not be limited thereto.

The method of forming the pressure-sensitive adhesive layer is not particularly limited, but is formed by, for example, coating the acrylic pressure-sensitive adhesive composition on an appropriate support body, such as a separator or substrate to form a pressure-sensitive adhesive layer, and then by drying or curing the coated layer (with heat or active energy ray), if needed. In curing the coated layer with an active energy ray (light curing), a photo-polymerization reaction is inhibited by the oxygen in the air; accordingly, it is preferable to block the oxygen by laminating an appropriate support body, such as a separator or substrate, on the pressure-sensitive adhesive layer, or by performing the light curing under nitrogen atmosphere. The appropriate support body to be used in forming the pressure-sensitive adhesive layer may be peeled off at an appropriate timing during the production of the acrylic pressure-sensitive adhesive tape or peeled off when the produced acrylic pressure-sensitive adhesive tape is used.

The thickness of the pressure-sensitive adhesive layer can be appropriately selected in accordance with the use purpose of the tape or the reducing property of the adhesive force; however, it is preferable to make the thickness to be larger than or equal to the maximum particle size of the fine particles (C) in order to maintain the smoothness of the surface of the layer; and the thickness is preferably within a range of, for example, 1 to 4000 $\mu$m, more preferably within a range of 10 to 3500 $\mu$m, and still more preferably within a range of approximately 30 to 3000 $\mu$m. If the thickness is too small, there are sometimes the cases where the adhesive force enough for holding an adherend cannot be obtained.

According to the acrylic pressure-sensitive adhesive tape described above, the adhesiveness to the adherends that are hardly adhered to others, such as polystyrene and ABS, etc., can be improved, and accordingly the tape can be applied to a wider range of adherends. Therefore, the acrylic pressure-sensitive adhesive tape according to the present embodiment can be widely used in various applications without selecting the materials of adherends.

(Embodiment 2)

Fig. 1 is a schematic sectional view illustrating the configuration of an acrylic pressure-sensitive adhesive tape 10 according to Embodiment 2. The acrylic pressure-sensitive adhesive tape 10 comprises a core layer 20 and a surface layer 30 provided on one side of the core layer 20. For the purpose of protecting the adhesive surface of the surface layer 30, it is preferable to have a separator (release film) on the surface layer 30.

(Core Layer)

The core layer 20 has the same components and form as those in the single-layered pressure-sensitive adhesive layer in the acrylic pressure-sensitive adhesive tape according to the aforementioned Embodiment 1.

The surface layer 30 is a pressure-sensitive adhesive layer different from the core layer 20. The components of the surface layer 30 are not particularly limited, but the surface layer 30 can be formed by changing the types or amounts of the aforementioned components (A), (B), (C), and (D) in the single-layered pressure-sensitive adhesive layer in the acrylic pressure-sensitive adhesive tape according to the aforementioned Embodiment 1, or by components obtained by excluding some of the components (B), (C), and (D). Among them, it is preferable to form the surface layer 30 with the components obtained by excluding the fine articles (C) and the bubbles (D) from the components in the single-layered pressure-sensitive adhesive layer in the acrylic pressure-sensitive adhesive tape according to Embodiment 1.

(Layer Thickness Ratio)

The thickness ratio of the surface layer 30 to the total thickness (total of the thickness of the core layer 20 and that of the surface layer 30) is preferably within a range of 8 to 20%. The total thickness thereof is not particularly limited, but is within a range of 0.4 mm to 4.0 mm, and preferably within a range of 0.5 mm to 2.5 mm.

(Method of forming multi-layers)

The method of laminating the core layer and the surface layer is not particularly limited, but the methods described below can be used.

(1) Method of forming multi-layers by laminating the surface layer on the core layer after the two layers have been separately cured: this method has the advantage that the accuracy of each layer thickness can be enhanced.
(2) Method of coating the core layer (or surface layer) on the surface layer (or core layer) that has been cured beforehand and then curing the core layer (or surface layer) : in this method, because one layer is coated on another layer that has been cured beforehand, the accuracy of each layer thickness can be enhanced.
Further, because one layer can be collectively coated on another layer that has been cured beforehand, the production steps can be simplified and the production time can be shortened.
(3) Method of sequentially or simultaneously coating the core layer (or surface layer) on the coated surface layer (or core layer) and then curing the two layers: in this method, both the surface layer and the core layer can be collectively coated.

In forming each layer, a coating coater, such as a roll coater or comma coater, may be used, or a slot die may be used. In particular, in the aforementioned method (3), a multi-layer slot die for coating each layer may also be used.
In the acrylic pressure-sensitive adhesive tape 10 described above, the adhesiveness to the adherends that are hardly adhered to others, such as polystyrene and ABS, etc., can be improved, and accordingly the tape 10 can be applied to a wider range of adrehends, in the same way as the acrylic pressure-sensitive adhesive tape according to Embodiment 1.

Examples

Hereinafter, the present invention will be described in detail based on Examples, but the invention should not be limited at all by these Examples.
Table 1 shows the components of the single-layered acrylic pressure-sensitive adhesive tape according to each of Example and Comparative Example.

[Table 2]

| | ACRYLIC POLYMER (A) | (METH) ACRYLIC POLYMER (B) | | FINE PARTICLE (C) | BUBBLE (D) | CROSS-LINKING AGENT | | THICKNESS (μM) |
|---|---|---|---|---|---|---|---|---|
| | COMPOSITION RATIO (100 PARS BY MASS) | COMPOSITION RATIO (100 PARTS BY MASS) | NUMBER OF PARIS (BASED ON 100 PARTS (BASED 100 PARTS BY MASS OF ACRYLIC POLYMER (A)) | COMPONENT | PERCENT BY VOLUME BASED ON THE WHOLE PRESSURE-SENSITIVE ADHESIVE LAYER % | TYPE | NUMBER OF PARTS | |
| EXAMPLE | 2EHA/AA=90/10 | CHMA/IBMA=60/40 | 30 | HOLLOW GLASS MICROSPHERE | APPROXIMATELY 20 | HDDA | 0.08 | 1200 |
| COMPARATIVE EXAMPLE | 2EHA/AA=90/10 | NO PRESENCE | 0 | HOLLOW GLASS MICROSPHERE | APPROXIMATELY 20 | HDDA | 0.08 | 1200 |

EP 2 385 090 B1

The abbreviations in Table 1 represent the following compounds.

2EHA: 2-ethylhexyl acrylate
AA: Acrylic acid
CHMA: Cyclohexyl methacrylate
IBMA: Isobutyl methacrylate
HDDA: 1, 6-hexanediol diacrylate

(Preparation of Acrylic Polymer (A) Syrup (2-EHA/AA=90/10))

After a photo-polymerization initiator (product name of "IRGACURE 651" made by BASF, 0.05 parts by mass) and a photo-polymerization initiator (product name of "IRGACURE 184" made by BASF, 0.05 parts by mass) were combined into a monomer mixture that was formed with 2- ethylhexyl acrylate (90 parts by mass) and acrylic acid (10 parts by mass), ultraviolet rays were radiated until the viscosity (BH viscometer, No. 5 rotor, 10 rpm, measurement temperature: 30°C) became 15 Pa*s to obtain a partially polymerized composition (acrylic polymer (A) syrup).

(Preparation of (Meth)Acrylic Polymer (B) (CHMA/IBMA=60/40))

After cyclohexyl methacrylate (CHMA 60 parts by mass), isobutyl methacrylate (IBMA, 40 parts by mass), and thioglycolic acid (4.0 parts by mass) were combined together, nitrogen gas was blown thereinto to remove dissolved oxygen. When the mixture was then heated to 90°C, Perhexyl O (made by NOF CORPORATION, 0.005 parts by mass) and Perhexyl D (made by NOF CORPORATION, 0.01 parts by mass) were mixed. Further, after the mixture was stirred at 90°C for one hour, the mixture was heated to 150°C over one hour to be stirred at the temperature for one hour. Subsequently, the mixture was heated to 170°C over one hour to be stirred at the temperature for 60 minutes.
Subsequently, the mixture was depressurized at 170°C and then stirred for one hour to remove the residual monomers, so that the (meth)acrylic polymer (B) was obtained. The mass average molecular weight (Mw) of the obtained (meth)acrylic polymer (B) was 3700. The glass transition temperature (Tg) of the obtained (meth)acrylic polymer (B) was 51°C.
Hereinafter, the method of forming the acrylic pressure-sensitive adhesive tape according to Example will be described.

(Preparation of Acrylic Pressure-Sensitive Adhesive Composition (Composition for Pressure-Sensitive Adhesive Layer))

After 1,6-hexanediol diacrylate (0.08 parts by mass), the previoously-obtained (meth) acrylic polymer (B) (30 parts by mass), and IRGACURE 651 (0.05 parts by mass) were added in the aforementioned acrylic polymer (A) syrup (100 parts by mass), hollow glass microspheres (product name of "CEL-STAR Z-27" made by Tokai Kogyo Co., Ltd.) were further added in an amount of 9.5 parts by mass based on the partially-polymerized monomer syrup.
A precursor of the pressure-sensitive adhesive composition was prepared by adding a fluorochemical surfactant (product name of "Surflon S-393" (made by AGC SEIMI CHEMICAL CO., LTD. ; acrylic copolymer having a polyoxyethylene group and a fluorinated hydrocarbon group in its side chain; MW = 8300, 0.5 parts by mass) into the above syrup into which the hollow glass microspheres had been added. In the precursor of the pressure-sensitive adhesive composition, the ratio of the volume of the hollow glass microspheres to the whole volume of the precursor of the pressure-sensitive adhesive composition was approximately 26% by volume.
The precursor of the pressure-sensitive adhesive composition was introduced between minute teeth on the stator in which the teeth are provided on a disk having a through-hole at its center, and teeth on the rotor that faces the stator having the teeth in which the teeth that are minute in the same way as those on the stator are provided on a disk, in an apparatus provided with the stator and rotor. While rotating the rotor at high speed, nitrogen gas was introduced into the precursor of the pressure-sensitive adhesive composition through the through-hole to mix bubbles into the precursor thereof. Thereby, the acrylic pressure-sensitive adhesive composition for the pressure-sensitive adhesive layer was obtained. The bubbles were mixed such that the ratio of the volume of the bubbles to the whole volume of the acrylic pressure-sensitive adhesive composition was approximately 20% by volume.

(Production of Pressure-Sensitive Adhesive Layer)

The obtained acrylic pressure-sensitive adhesive composition was coated, with a roll coater, on the surface of a polyester film (release liner made of polyester) having a thickness of 38 μm, the above surface being subjected to a release treatment, so that the thickness of the coating was 1200 μm. Subsequently, the surface of a polyester release liner that has been subjected to a release treatment was attached to the other surface of the coated acrylic pressure-sensitive adhesive composition such that the surface that has been subjected to a release treatment faced the one surface of the acrylic pressure-sensitive adhesive composition. Subsequently, ultraviolet rays were radiated, for three minutes, onto both the surfaces of the acrylic pressure-sensitive adhesive composition using black light lamps each having a lighting intensity of 5 mW/cm$^2$. Thus, the acrylic pressure-sensitive adhesive tape of Example made of the single-layered acrylic pressure-sensitive adhesive layer having a thickness of 1200 μm was obtained.

(Comparative Example)

The basic method of producing the acrylic pressure-sensitive adhesive tape according to Comparative Example is the same as in Example. However, the acrylic pressure-sensitive adhesive tape according to Comparative Example does not contain the (meth)acrylic polymer (B) in the pressure-sensitive adhesive layer.

(Test Method)

[90° Peeling-Off Test]

A SUS plate, ABS plate, polystyrene (PS) plate, and polycarbonate (PC) plate, each having a size of 25 mm in width x 50 mm in thickness, were prepared as adherends. Each adherend was beforehand washed with IPA and then left for 30 minutes or longer. The release liner on one side of the acrylic pressure-sensitive adhesive tape of each of Example and Comparative Example was peeled off, and the tape was backed up with a polyethylene terephthalate (PET substrate) having a thickness of 50 μm. On the other hand, the release film on the other side of the acrylic pressure-sensitive adhesive tape was peeled off to expose the pressure-sensitive adhesive layer. After the pressure-sensitive adhesive tape was press-bonded to each of the adherends by one way of a 5-kg roller, the tape was aged at 23°C and 50% RH. After the aging, the acrylic pressure-sensitive adhesive tape was peeled off, under the atmosphere of 23°C, in the 90° peeling-off direction at a tension speed of 300 mm/min to measure the adhesive force (unit: N/25 mm) to each of the adherends. The measurement results are shown in Table 2.

[Table 3]

|  | ADHESIVE FORCE TO SUS PLATE [N/25mm] | ADHESIVE FORCE TO ABS PLATE [N/25mm] | ADHESIVE FORCE TO PS PLATE [N/25mm] | ADHESIVE FORCE TO PC PLATE [N/25mm] |
|---|---|---|---|---|
| EXAMPLE | 44 | 53 | 44 | 54 |
| COMPARATIVE EXAMPLE | 45 | 32 | 26 | 33 |

As shown in Table 2, it was confirmed that the acrylic pressure-sensitive adhesive tape of Example demonstrates, to each of the adherends, the adhesive force that is almost the same as or higher than that of the acrylic pressure-sensitive adhesive tape of Comparative Example. In the acrylic pressure-sensitive adhesive tape of Example, it was particularly confirmed that the adhesive force to each of the PS plate and ABS plate, which are adherends that are hardly adhered to others, is equal to that to each of the SUS plate and PC plate. More specifically, in the acrylic pressure-sensitive adhesive tape of Example, the adhesive force occurring when the tape was peeled off, 72 hours later after the tape had been adhered to each of the polystyrene plate and ABS plate that were adherends, in the 90° peeling-off direction at a tension speed of 300 mm/min, is 40 N/25 mm or higher.

The present invention should not be limited to the aforementioned embodiments, and various modifications, such as design modifications, can be made with respect to the above embodiments based on the knowledge of those skilled in the art, and an embodiment with such a modification can fall within the scope of the present invention.

For example, in the acrylic pressure-sensitive adhesive tape according to the aforementioned Embodiment 2, a pressure-sensitive adhesive layer, which is different from the pressure-sensitive adhesive layer containing the (meth) acrylic polymer (B), is provided on one side of the layer containing the (meth) acrylic polymer (B); however, pressure-sensitive adhesive layers, which are different from the pressure-sensitive adhesive layer containing the (meth)acrylic polymer (B), may be provided on both sides of the layer containing the (meth)acrylic polymer (B).

Claims

1. An acrylic pressure-sensitive adhesive tape comprising a pressure-sensitive adhesive layer containing

an acrylic polymer (A) having a mass average molecular weight (Mw) of from 100000 to 5000000 and containing, as a monomer unit, from 50 to 99.9% by mass of a (meth)acrylic acid alkyl ester having a linear or branched-chain $C_{1-20}$ alkyl group based on the total mass of the monomer components for preparing the acrylic polymer (A), a (meth)acrylic polymer (B) whose mass average molecular weight (Mw) is such that $1000 \leq Mw < 30000$, a fine particle (C), and a bubble (D).

2. The acrylic pressure-sensitive adhesive tape according to claim 1, wherein the pressure-sensitive adhesive layer is a single layer.

3. The acrylic pressure-sensitive adhesive tape according to claim 1 comprising multi layers in which the pressure-sensitive adhesive layer and another pressure-sensitive adhesive layer different from the pressure-sensitive adhesive layer are laminated.

**Patentansprüche**

1. Acrylhaftklebeband, umfassend eine Haftklebeschicht enthaltend
ein Acrylpolymer (A) mit einem massegemittelten Molekulargewicht (Mw) von 100000 bis 5000000 und enthaltend, als eine Monomereinheit, 50 bis 99,9 Massen-% eines (Meth)acrylsäurealkylesters mit einer linearen oder verzweigten $C_{1-20}$-Alkylgruppe, bezogen auf die Gesamtmasse der Monomerkomponenten zum Herstellen des Acrylpolymers (A),
ein (Meth)acrylpolymer (B), dessen massegemitteltes Molekulargewicht (Mw) so ist, dass $1000 \leq Mw < 30000$,
ein feines Teilchen (C), und
ein Bläschen (D).

2. Acrylhaftklebeband nach Anspruch 1, wobei die Haftklebeschicht eine einzelne Schicht ist.

3. Acrylhaftklebeband nach Anspruch 1, umfassend Mehrfachschichten, in denen die Haftklebeschicht und eine andere Haftklebeschicht, die von der Haftklebeschicht verschieden ist, laminiert sind.

**Revendications**

1. Bande adhésive sensible à la pression acrylique comprenant une couche adhésive sensible à la pression contenant un polymère acrylique (A) ayant une masse moléculaire moyenne en masse (Mw) de 100 000 à 5 000 000 et contenant, comme unité monomère, de 50 à 99,9 % en masse d'un ester alkylique d'acide (méth)acrylique ayant un groupe alkyle en $C_{1-20}$ à chaîne linéaire ou ramifiée rapporté à la masse totale des constituants monomères pour la préparation du polymère acrylique (A),
un polymère (méth)acrylique (B) dont la masse moléculaire moyenne en masse (Mw) est telle que $1000 \leq Mw < 30000$,
une fine particule (C), et
une bulle (D).

2. Bande adhésive sensible à la pression acrylique selon la revendication 1, dans laquelle la couche adhésive sensible à la pression est une couche unique.

3. Bande adhésive sensible à la pression acrylique selon la revendication 1, comprenant des couches multiples dans laquelle la couche adhésive sensible à la pression et une autre couche adhésive sensible à la pression différente de la couche adhésive sensible à la pression sont stratifiées.

# Fig. 1

10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10509108 A
- JP 6207151 A
- JP 2001049200 A
- JP 2003049130 A
- JP 6200225 A
- JP 2005239831 A
- JP 1999504054 PCT